# EUROPEAN PATENT SPECIFICATION

(11) **EP 2 617 285 B1**
(45) Date of publication and mention of the grant of the patent: **26.02.2014**
(21) Application number: 13150438.3
(22) Date of filing: 08.01.2013
(51) Int. Cl.: A01K 89/027

(54) **Spinning reel and drag switching device thereof**
Wickelspule und Ziehumschaltungsvorrichtung dafür
Bobine de filage et son dispositif de commutation de traînée

(30) Priority: 23.01.2012 JP 2012010679
(43) Date of publication of application: 24.07.2013
(73) Proprietor: Shimano Components (Malaysia) SDN BHD, 81500 Pontian (Johor) (MY)
(72) Inventor: Chan, Yik Hui, 81500 Pontian (Johor) (MY)
(74) Representative: Sonnenberg, Fred

(56) References cited:
- EP-A1- 2 260 700
- EP-A2- 2 111 754

## Description

### BACKGROUND OF THE INVENTION

### Field of the Invention

The present invention relates to a spinning reel drag switching device configured to switch an actuation state of a first drag mechanism for braking a spool attached to a reel unit of a spinning reel that forwardly releases a fishing line. Further, the present invention relates to a spinning reel including the drag switching device.

### Background Art

Some of the conventional spinning reels are embedded with a drag mechanism and a drag switching device (see e.g., Japan Laid-open Patent Application Publication No. JP-A-2010-279334). The drag mechanism is configured to brake rotation of a spool in a fishing-line releasing direction. The drag switching device is configured to switch the drag mechanism between a brake activation state and a brake deactivation state.

The conventional drag switching device normally includes a drag switching lever attached to the reel unit. The drag switching lever is pivotable between a brake activation position corresponding to the brake activation state and a brake deactivation position corresponding to the brake deactivation state. The conventional drag switching lever includes a pivot shaft and an operating part coupled to the two ends of the pivot shaft in an integrally pivotable state. The operating part includes a first lever portion, a second lever portion, and a coupling member. The first lever portion is coupled to one end of the pivot shaft, whereas the second lever portion is coupled to the other end of the pivot shaft. The coupling member couples the first lever portion and the second lever portion.

In the drag switching lever, when attaching the operating part to the pivot shaft, the base ends of the first and second lever portions are first fixed to the pivot shaft by means of a screw member. Next, the coupling member is attached between the distal ends of the first and second lever portions. Further, another screw member is inserted through the first lever portion and is screwed into the second lever portion through the coupling member. The operating part is thus attached to the pivot shaft.

In attaching the operating part to the pivot shaft, the conventional drag switching lever requires fixing the base ends of the first and second lever portions to the pivot shaft and fixing the distal ends of the first and second lever portions through the coupling member. Therefore, the drag switching lever has drawbacks that the operating part is constituted of a large number of components and complex operations are required for attaching the operating part to the pivot shaft.

It is an object of the present invention to reduce the number of components of an operating part and easily attach the operating part to a pivot shaft in a drag switching lever.

### SUMMARY OF THE INVENTION

A spinning reel drag switching device according to a first aspect of the present invention is configured to switch an activation state of a first drag mechanism for braking a spool attached to a reel unit of a spinning reel that forwardly releases a fishing line. The spinning reel drag switching device includes a drag switching lever and a switch mechanism. The drag switching lever, including a pivot shaft and an operating part, is configured to pivot between a first position and a second position shifted away from the first position at a predetermined pivot angle. The pivot shaft is disposed along a transverse direction of the reel unit, while being rotatably supported by the reel unit. The operating part has a lever portion, a first pivot shaft attached portion and a second pivot shaft attached portion. The lever portion is disposed on a first end of the operating part. The first and second pivot shaft attached portions are disposed on a second end of the operating part, arranged opposite to the first end. The first and second pivot shaft attached portions are integrally formed with the lever portion, while branching from the lever portion and extending towards the second end along an outer lateral surface of the reel unit. The first and second pivot shaft attached portions are attached to the pivot shaft in an integrally rotatable state. The switch mechanism is configured to: activate the first drag mechanism when the drag switching lever is disposed in the first position; and deactivate the first drag mechanism when the drag switching lever is disposed in the second position. The pivot shaft has a first non-circular portion on one end thereof and a second non-circular portion on the other end thereof The first pivot shaft attached portion has a first non-circular recess arranged to engage with the first non-circular portion from a position located radially outwards of the pivot shaft, whereas the second pivot shaft attached portion has a second non-circular recess arranged to engage with the second non-circular portion from a position located radially outwards of the pivot shaft.

In the present spinning reel drag switching device, the first drag mechanism is configured to be activated when the drag switching lever is disposed in the first position and deactivated when the drag switching lever is pivoted to the second position. The operating part of the drag switching lever has the lever portion and the first and second pivot shaft attached portions integrally formed with the lever portion. Therefore, the operating part is constituted of a single member. Accordingly, the number of components of the operating part can be reduced.

Further, when attaching the operating part to the pivot shaft, it is only required to: engage the first non-circular recess formed on the first pivot shaft attached portion of the operating part with the first non-circular portion formed on one end of the pivot shaft; and engage the second pivot shaft attached portion of the operating part with the second non-circular portion formed on the other end of the pivot shaft. Therefore, the operating part can be easily attached to the pivot shaft.

The operating part can be herein formed by a single member. Therefore, the number of components of the operating part can be reduced. Further, the operating part can be attached to the pivot shaft only by engaging the first and second non-circular recesses of the operating part with the first and second non-circular portions of the pivot shaft. The operating part can be thereby easily attached to the pivot shaft. Therefore, the component cost and the assembling cost of the drag switching lever can be reduced.

A spinning reel drag switching device according to a second aspect of the present invention relates to the spinning reel drag switching device according to the first aspect of the present invention. In the spinning reel drag switching device, each of the first and second non-circular portions has a pair of parallel linear portions and a pair of connecting portions that connect ends of one of the linear portions to ends of the other of the linear portions. Each of the first and second non-circular recesses has a slit that is engaged with the linear portions of a corresponding one of the first and second non-circular portions, while extending to an edge of the second end of a corresponding one of the first and second pivot shaft attached portions.

In this case, each of the first and second pivot shaft attached portions has a slit extended to the second end thereof. Accordingly, the first and second pivot shaft attached portions can be engaged with the first and second non-circular portions, respectively, by sliding the first and second shaft attached portions towards the pivot shaft from an axially outward position. Therefore, the operating part can be further easily attached to the pivot shaft.

A spinning reel drag switching device according to a third aspect of the present invention relates to the spinning reel drag switching device according to one of the first and second aspects of the present invention. In the spinning reel drag switching device, the pivot shaft has a screw hole on an end surface of the aforementioned one end for allowing a screw member to be screwed therein. The first non-circular recess penetrates through the first pivot shaft attached portion for allowing the screw hole to be exposed to the outside therefrom. In this case, the operating part can be easily fixed to the pivot shaft by means of the screw member.

A spinning reel drag switching device according to a fourth aspect of the present invention relates to the spinning reel drag switching device according to the third aspect of the present invention. In the spinning reel drag switching device, the first non-circular recess has a seat surface on an axially outer surface thereof and the seat surface is dented for allowing a head portion of the screw member to be disposed thereon. In this case, the head portion of the screw member is accommodated within the seat surface without protruding axially outwards. Therefore, the fishing line is prevented from getting stuck with the head portion of the screw member.

A spinning reel according to a fifth aspect of the present invention includes the spinning reel drag switching device according to one of the first to fourth aspects of the present invention. In this case, it is possible to provide a spinning reel whereby the advantageous effects of the first to fourth aspects of the present invention can be achieved.

### Advantageous Effects of Invention

Overall, according to the present invention, the operating part can be constituted of a single member. Therefore, the number of components of the operating part can be reduced. Further, the operating part can be attached to the pivot shaft only by engaging the first and second non-circular recesses of the operating part with the first and second non-circular portions of the pivot shaft. Therefore, the operating part can be easily attached to the pivot shaft. Accordingly, the component cost and the assembling cost of the drag switching lever can be reduced.

### BRIEF DESCRIPTION OF THE DRAWINGS

Referring now to the attached drawings which form a part of this original disclosure:
FIG. 1 is a partially cross-sectioned side view of a spinning reel employing an exemplary embodiment of the present invention;
FIG. 2 is a cross-sectional view of a rear part of a reel unit;
FIG. 3 is a cross-sectional view of FIG. 1 sectioned along a line III-III;
FIG. 4 is an exploded perspective view of a rear drag mechanism and a drag switching device;
FIG. 5 is a partial perspective view of a drag switching lever seen from a first non-circular portion side; and
FIG. 6 is a partial perspective view of the drag switching lever seen from a second non-circular portion side.

### DETAILED DESCRIPTION OF THE EMBODIMENTS

### <Entire Structure>

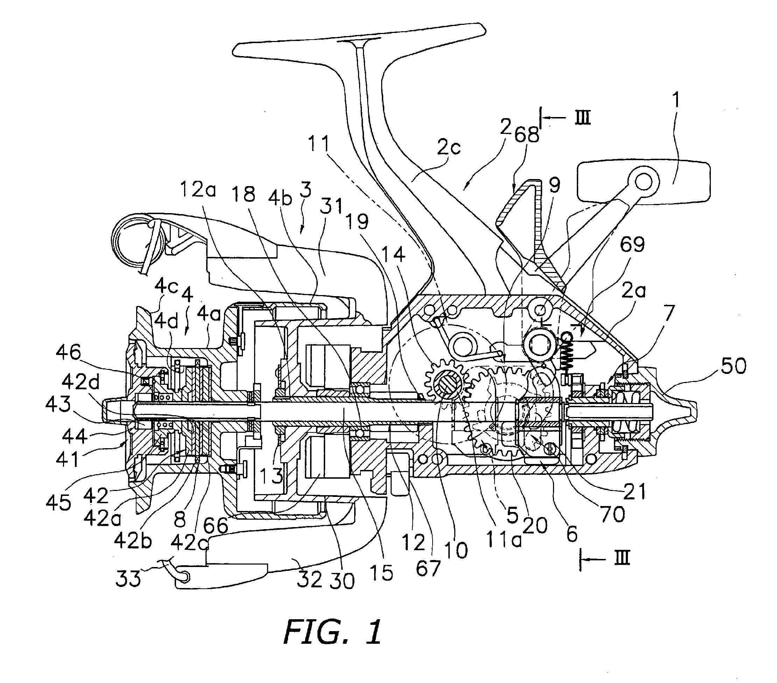

As illustrated in FIG. 1, a spinning reel employing an exemplary embodiment of the present invention includes a handle 1, a reel unit 2, a rotor 3 and a spool 4. The reel unit 2 supports the handle 1 in a rotatable state. The rotor 3 is rotatably supported at the front of the reel unit 2. The spool 4 serves to wind a fishing line onto the outer peripheral surface thereof. The spool 4 is disposed at the front of the rotor 3 while being movable back and forth.

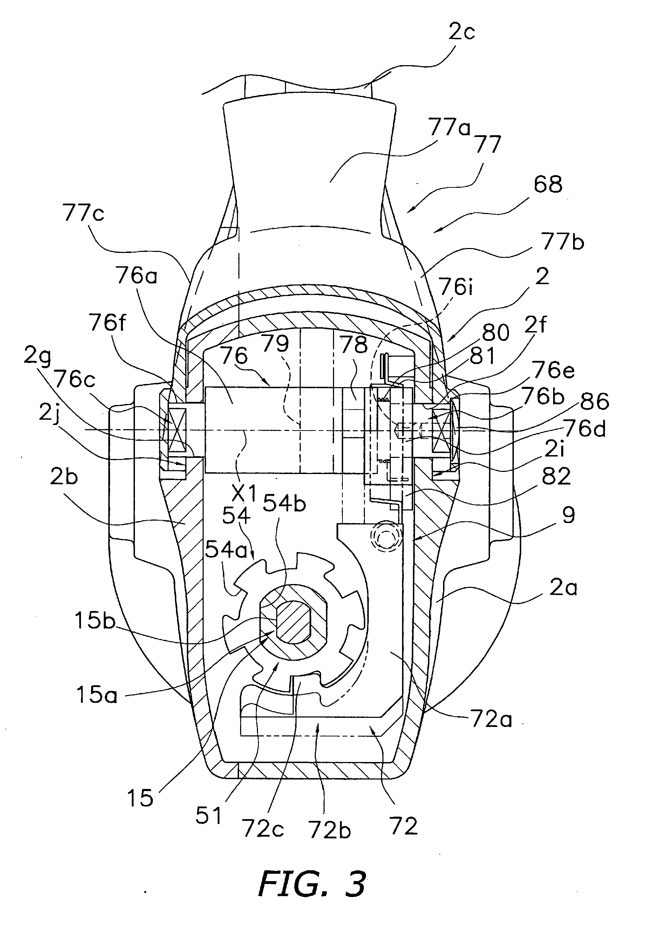

As illustrated in FIGS. 1 and 3, the reel unit 2 includes a reel body 2a and a lid member 2b. The reel body 2a is a member in which various mechanisms are mounted. The lid member 2b is detachably attached to the reel body 2a. The lid member 2b, together with the reel body 2a, forms a mechanism accommodation space for accommodating therein the various mechanisms.

The reel unit 2 is a member made of either metal, such as aluminum alloy, or synthetic resin. The lid member 2b is a member made of metal such as aluminum alloy. A fishing rod attachment 2c (see FIG. 1) is integrally formed with the upper part of either the reel body 2a or the lid member 2b (in the present exemplary embodiment, it is the reel body 2a). The fishing rod attachment 2c extends back and forth in a T-shape.

As illustrated in FIG. 3, the reel body 2a has a first lever seat surface 2i dented on the outer side of the rear part of the reel body 2a. The first lever seat surface 2i has a first support aperture 2f. The lid member 2b has a second lever seat surface 2j dented on the outer side surface of the rear part of the lid member 2b. The second lever seat surface 2j is disposed in parallel to the first lever seat surface 2i. The second lever seat surface 2j has a second support aperture 2g. The second support aperture 2g is disposed coaxially with the first support aperture 2f. Portions surrounding the first and second support apertures 2f and 2g of the first and second lever seat surfaces 2i and 2j slightly protrude more axially outwards than the other portions. Therefore, the area of a friction surface against a drag switching lever 68, to be described later, is reduced. Accordingly, strong force is not required to execute a pivot operation of the drag switching lever 68.

The mechanism accommodation space accommodates a rotor drive mechanism 5, an oscillating mechanism 6 and a drag switching device 9. The rotor drive mechanism 5 is configured to rotate the rotor 3 in conjunction with the rotation of the handle 1. The oscillating mechanism 6 is configured to move the spool 4 back and forth for uniformly winding the fishing line onto the spool 4. The drag switching device 9 is configured to switch activation/deactivation of a rear drag mechanism 7 and a front drag mechanism 8 (an example of a first drag mechanism). The rear drag mechanism 7 is configured to brake the spool 4, whereas the front drag mechanism 8 is configured to brake the spool 4 with a braking force greater than that of the rear drag mechanism 7.

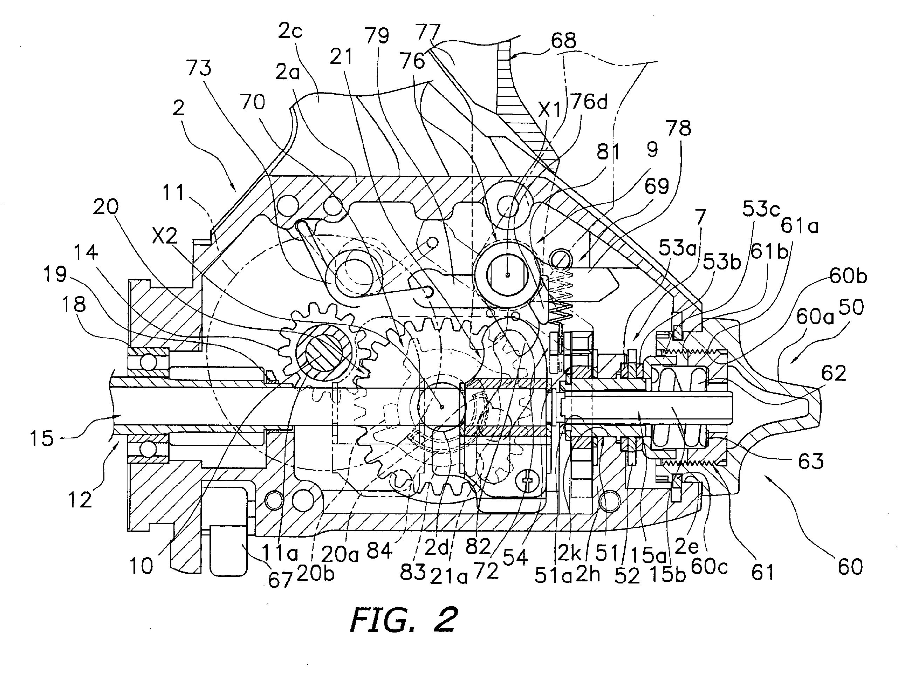

As illustrated in FIGS. 1 and 2, the rotor drive mechanism 5 includes a handle shaft 10, a face gear 11 and a pinion gear 12. The handle shaft 10 is a member to which the handle 1 is attached in an integrally rotatable manner. The face gear 11 is rotated together with the handle shaft 10. The pinion gear 12 is meshed with the face gear 11. The face gear 11 may be formed integrally with or separately from a face gear shaft 11a. The handle shaft 10 of the handle 1 is screwed and fixed into either of the right and left ends of the face gear shaft 11 a. The face gear shaft 11a is rotatably supported by the reel body 2a and the lid member 2b through at least a bearing (not illustrated in the figures). The pinion gear 12 has a tubular shape for allowing a spool shaft 15 to penetrate through the inside thereof. A front potion 12a of the pinion gear 12 is fixed to the rotor 3 by means of a nut 13 while penetrating through the center part of the rotor 3. The axially intermediate portion and the axially rear portion of the pinion gear 12 are rotatably supported by the reel body 2a through a bearing 18 and a bearing 19, respectively.

The oscillating mechanism 6 is a mechanism configured to move the spool shaft 15 back and forth for moving the spool 4 in the same direction as the spool shaft 15. The spool 4 is coupled to the tip of the spool shaft 15 through the front drag mechanism 8. The oscillating mechanism 6 receives rotation delivered through a driving gear 14 disposed on the face gear shaft 11 a. The face gear shaft 11a is integrally formed with the face gear 11. The handle shaft 10 of a screw-in type, for example, is coupled to the face gear shaft 11a while being integrally rotatable therewith. The face gear shaft 11a may be formed separately from with the face gear 11.

The oscillating mechanism 6 includes a cam gear 20 and a slider 21. The cam gear 20 is meshed with the driving gear 14 disposed on the face gear shaft 11a. The slider 21 is configured to be moved back and forth by the cam gear 20. The driving gear 14 may be disposed integrally with or separately from the face gear shaft 11a, while being integrally rotatable with the face gear shaft 11a. For example, the driving gear 14 is a non-circular gear with two semi-axes. The spool shaft 15 is coupled to the slider 21 while being rotatable but immovable in the axial direction. The slider 21 has a cam receiver part 21a on the second surface thereof (i.e., a rear-side surface on the opposite side of the front-side surface illustrated in FIG. 2). The cam receiver part 21a is formed as a groove having a flat S-shape.

The cam gear 20 is separated farther from the fishing rod attachment 2c than the face gear shaft 11a, while being disposed rearwards with respect to the face gear shaft 11a. For example, the cam gear 20 is a non-circular gear with four semi-axes. The cam gear 20 is attached to a gear shaft 2d while being rotatable about a second axis X2 arranged in parallel to the face gear shaft 11a. The gear shaft 2d protrudes from the inner surface of the reel body 2a. The cam gear 20 has a cam protrusion 20a on the first surface thereof (i.e., the front-side surface illustrated in FIG. 2). The cam protrusion 20a is engaged with the cam receiver part 21a of the slider 21. The cam gear 20 has a member attachment portion 20b on a second surface thereof opposite to the first surface. The member attachment portion 20b protrudes from the second surface of the cam gear 20 in a roughly circular shape. A press member 83 of a return mechanism 70, to be described later, is attached to the member attachment portion 20b. The member attachment portion 20b will be described in detail when describing the return mechanism 70.

As illustrated in FIG. 1, the rotor 3 has a cylindrical part 30, a first rotor arm 31 and a second rotor arm 32. The first rotor arm 31 and the second rotor arm 32 are integrally formed with the cylindrical part 30. The first rotor arm 31 and the second rotor arm 32 extend forwards from the rear end of the cylindrical part 30 while being laterally separated from the cylindrical part 30. Further, a bail arm 33 is attached to the tip of the first rotor arm 31 and that of the second rotor arm 32, while being pivotable between a fishing-line winding position and a fishing-line releasing position. The bail arm 33 is provided for guiding the fishing line and winding it onto the spool 4 in conjunction with rotation of the rotor 3.

The cylindrical part 30 of the rotor 3 accommodates an anti-reverse mechanism 66. The anti-reverse mechanism 66 is configured to prevent/allow reverse rotation of the rotor 3. The anti-reverse mechanism 66 includes a roller-type one-way clutch. The anti-reverse mechanism 66 is configured to switch the one-way clutch between an activated state and a deactivated state in response to the control of a switching lever 67, for preventing/allowing reverse rotation of the rotor 3. The switching lever 67 is pivotably attached to the bottom surface of the front part of the reel unit 2.

The spool 4 is disposed between the first rotor arm 31 and the second rotor arm 32 of the rotor 3. The spool 4 is rotatably attached to the tip of the spool shaft 15. The spool 4 is also coupled to the spool shaft 15 through the front drag mechanism 8. The spool 4 has a bobbin trunk 4a, a skirt 4b and a flange 4c. The bobbin trunk 4a is used for winding the fishing line onto the outer periphery thereof. The skirt 4b is integrally formed with the rear part of the bobbin trunk 4a. The flange 4c is integrally formed on the front end of the bobbin trunk 4a. The bobbin trunk 4a has a drag accommodating recess 4d in the inside thereof. The drag accommodating recess 4d is a circular recess for accommodating a front friction part 42, to be described later. The spool 4 is selectively braked by either the front drag mechanism 8 or the rear drag mechanism 7. The rear drag mechanism 7 is herein configured to exert braking force less than that of the front drag mechanism 8.

### <Structure of Front Drag Mechanism >

The front drag mechanism 8 is disposed on the tip of the spool shaft 15. The front drag mechanism 8 includes a front drag knob 41 and the front friction part 42. The front drag knob 41 is screwed onto the spool shaft 15 and serves to regulate drag force. The front friction part 42 is pressed by the front drag knob 41. The front drag knob 41 includes a knob body 44 and a press portion 45. A nut 43, screwed onto the spool shaft 15, is attached to the knob body 44 while being integrally rotatable with the knob body 44 and movable in the axial direction with respect to the knob body 44. The press portion 45 is engaged with the knob body 44 while being rotatable but immovable in the axial direction. In addition, the press portion 45 is integrally rotatable with the spool shaft 15. The press portion 45 is configured to make contact with the front friction part 42 for braking the spool 4. Further, a coil spring 46 is disposed in a compressed state between the nut 43 and the press portion 45 and on the outer peripheral side of the spool shaft 15.

For example, the front friction part 42 includes a first drag washer 42a, a second drag washer 42b and a third drag washer 42c. The first drag washer 42a is disposed to make contact with the press portion 45. The first drag washer 42a is, for instance, coupled to the spool shaft 15 while being integrally rotatable therewith. The second drag washer 42b is, for instance, coupled to the spool 4 while being integrally rotatable therewith. The third drag washer 42c is, for instance, coupled to the spool shaft 15 while being integrally rotatable therewith. Further, drag discs 42d are disposed between the first drag washer 42a and the second drag washer 42b, between the second drag washer 42b and the third drag washer 42c, and between the third drag washer 42c and a wall of the drag accommodating recess 4d, respectively. For example, the drag discs 42d are made of graphite or felt.

### <Structure of Rear Drag Mechanism>

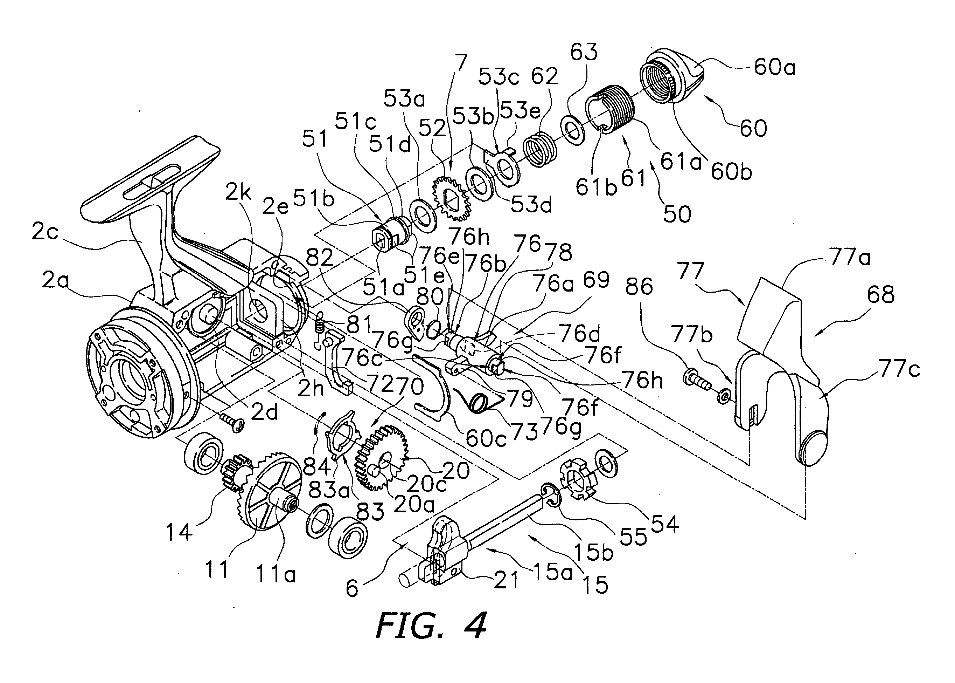

The rear drag mechanism 7 is a drag mechanism configured to generate braking force less than that of the front drag mechanism 8. The rear drag mechanism 7 is mainly used during casting, to allow a live bait to swim in the water. As illustrated in FIGS. 2 and 4, the rear drag mechanism 7 is disposed on a rear portion 15a of the spool shaft 15. The rear drag mechanism 7 includes a rear drag knob 50, a tubular member 51, a click gear 52, a fourth drag washer 53a, a fifth drag washer 53b and a sixth drag washer 53c. The rear drag knob 50 is screwed into the reel unit 2 and serves to regulate drag force. The tubular member 51 is attached to the rear portion 15a of the spool shaft 15 while being integrally rotatable therewith and movable in the axial direction with respect thereto. The click gear 52 is attached to the outer peripheral surface of the rear part of the tubular member 51 while being integrally rotatable therewith. The fourth drag washer 53a and the fifth drag washer 53b are disposed in contact with the two surfaces of the click gear 52.

The rear drag knob 50 is attached to an attachment hole 2e formed on the rear surface of the reel body 2a, while being rotatable and immovable in the axial direction. The rear drag knob 50 includes a knob body 60 and a nut member 61. The knob body 60 is rotatably attached to the attachment hole 2e. The nut member 61 is screwed into the inner peripheral surface of the knob body 60. The knob body 60 is a closed-end tubular member and has a knob portion 60a on the rear surface thereof. The knob portion 60a linearly protrudes along the diameter direction of the knob body 60. Further, the knob body 60 has a female threaded portion 60b on the inner peripheral surface thereof. The female threaded portion 60b is screwed onto the nut member 61. The knob body 60 is held by a retainer member 60c while being prevented from being detached from the attachment hole 2e. The retainer member 60c is attached to the inner surface of the attachment hole 2e.

The nut member 61 is a closed-end tubular member and has a male threaded portion 61a on the outer peripheral surface thereof. The male threaded portion 61a is screwed into the female threaded portion 60b of the knob body 60. The nut member 61 has a pair of interlock slits 61b on the front end surface thereof. The interlock slits 61b are interlocked with the sixth drag washer 53c that is prevented from rotating with respect to the reel body 2a. Accordingly, the nut member 61 is prevented from rotating with respect to the reel body 2a. The sixth drag washer 53c is attached to the rear part (opened part) of the tubular member 51. As illustrated in FIG. 4, the sixth drag washer 53c has a first interlock piece 53d and a pair of second interlock pieces 53e. The first interlock piece 53d is interlocked with the inner surface of the reel body 2a. The second interlock pieces 53e are interlocked with the interlock slits 61b of the nut member 61, respectively. The nut member 61 accommodates a coil spring 62 on the inner peripheral side thereof.

The coil spring 62 serves to regulate drag force. The coil spring 62 is disposed in a compressed state between a spring receiver washer 63 and the rear surface of the sixth drag washer 53c. The spring receiver washer 63 is attached to the bottom surface of the nut member 61.

The tubular member 51 constitutes a part of the rear drag mechanism 7 and also constitutes a part of the drag switching device 9. As illustrated in FIGS. 2 and 4, the tubular member 51 is attached to a stepped through hole 2k formed in a plate-shaped attachment part 2h disposed in the rear part of the reel body 2a. The tubular member 51 is herein rotatable while being restricted from moving forwards. Further, the tubular member 51 is restricted from moving rearwards by the fourth, fifth and sixth drag washers 53a, 53b and 53c pressed by the coil spring 62. Therefore, the tubular member 51 is prevented from moving back and forth with respect to the reel unit 2.

As illustrated in FIG. 4, the tubular member 51 is attached to chamfered portion 15b, which is parallel and opposite to the tubular member 51 and is formed on the rear portion 15a of the spool shaft 15, while being integrally rotatable with and movable in the axial direction with respect to the spool shaft 15. The tubular member 51 has an elongated hole 51a at the inner peripheral surface of the tubular member 51. The elongated hole 51a is fitted with the chamfered portion 15b. The tubular member 51 further includes a first support portion 51b, a rimmed portion 51c, and a second support portion 51d. The first support portion 51b is formed on the front side of the tubular member 51. The rimmed portion 51c has a diameter greater than that of the first support portion 51b. The second support portion 51d has a diameter less than that of the rimmed portion 51c. The first support portion 51b has a pair of parallel chamfered portions 51e. Likewise, the second support portion 51d also has a pair of parallel chamfered portions 51e. The rimmed portion 51c makes contact with the stepped portion of the through hole 2k. Accordingly, the tubular member 51 is restricted from moving forwards. A rotation member 54 is attached onto the first support portion 51b formed on the front side of the tubular member 51, while being integrally rotatable therewith. The rotation member 54 constitutes a part of the drag switching device 9. On the other hand, the fourth drag washer 53a, the click gear 52 and the fifth drag washer 53b are attached to the second support portion 51d formed on the rear side of the tubular member 51. Among these things, the click gear 52 is coupled to the tubular member 51 while being integrally rotatable therewith.

The click gear 52 makes contact with the tip of a sound producing spring (not illustrated in the figures) that is configured to produce sound in conjunction with actuation of the rear drag mechanism 7 (i.e., in conjunction with rotation of the spool shaft 15). Further, the click gear 52 also functions as a drag washer of the rear drag mechanism 7, which is integrally rotated with the spool shaft 15.

The fourth drag washer 53a and the fifth drag washer 53b are both attached to the reel body 2a and the spool shaft 15 while being rotatable therewith. The sixth drag washer 53c is rotatably attached to the spool shaft 15 while being non-rotatably interlocked with the reel body 2a. Further, the six drag washer 53c prevents rotation of the nut member 61 as described above.

### <Structure of Drag Switching Device>

As illustrated in FIGS. 2, 3 and 4, the drag switching device 9 includes the drag switching lever 68, a switch mechanism 69 and the return mechanism 70. The drag switching lever 68 is attached to the reel unit 2 while being pivotable between a locked position (an example of a first position) and an unlocked position (an example of a second position). The locked position is depicted with a solid line in FIG. 2, whereas the unlocked position is depicted with a dashed two-dotted line in FIG. 2. The return mechanism 70 is configured to return the drag switching lever 68 to the locked position from the unlocked position.

### <Structure of Drag Switch Lever>

As illustrated in FIGS. 2 and 4, the drag switching lever 68 is selectively urged between the locked position and the unlocked position by means of a toggle spring 73. The drag switching lever 68 is attached to the upper rear part of the reel unit 2 while being pivotable about a first axis X1 arranged skew to the spool shaft 15 between the locked position depicted with the solid line in FIG. 2 and the unlocked position depicted with the dashed two-dotted line in FIG. 2. The first axis X1 is positioned in parallel to the face gear shaft 11a. The first axis X1 is positioned closer to the fishing rod attachment 2c than the face gear shaft 11a is, while being positioned rearwards with respect to and in parallel to the face gear shaft 11a. As illustrated in FIG. 3, the drag switching lever 68 includes a pivot shaft 76, an operation part 77 and a second arm 78. The pivot shaft 76 is disposed in the upper rear part of the reel unit 2 along the first axis X1. The operation part 77 is disposed on both ends of the pivot shaft 76 while being integrally pivotable therewith. The second arm 78 is integrally formed with the pivot shaft 76, and is thereby integrally rotatable with the pivot shaft 76. As illustrated in FIG. 2, the second arm 78 is configured to press a lock member 72 towards a separate position from an interlock position.

### <Structure of Pivot Shaft>

For example, the pivot shaft 76 is a member made of metal such as stainless alloy or aluminum alloy. As illustrated in FIGS. 3 and 4, the pivot shaft 76 has a large diameter portion 76a, a first small diameter portion 76b and a second small diameter portion 76c. The large diameter portion 76a is integrally formed with the second arm 78 and a spring holding arm 79. The first small diameter portion 76b and the second small diameter portion 76c are formed on the two sides of the large diameter portion 76a. The second arm 78 is an arm for pressing down the lock member 72 that locks/unlocks the rotation member 54. The spring holding arm 79 holds a first end of the toggle spring 73. The spring holding arm 79 forwardly protrudes from the large diameter portion 76b. On the other hand, the second arm 78 backwardly protrudes from the large diameter portion 76. In other words, the second arm 78 is formed on the opposite side of the spring holding arm 79. The large diameter portion 76a has a restricting protrusion 76d formed on its outer peripheral surface, towards the first small diameter portion 76b side. The restricting protrusion 76d protrudes from the outer peripheral surface of the large diameter portion 76a to a position where it is opposite to the outer peripheral surface of the first small diameter portion 76b. The restricting protrusion 76d is provided for making a first arm 82, to be described later, pivot in conjunction with the drag switching lever 68 when the drag switching lever 68 is moved to the unlocked position from the locked position.

As illustrated in FIG. 3, the first small diameter portion 76b is the right-side small diameter portion of the pivot shaft 76 and is supported by the first support aperture 2f of the reel body 2a. The first small diameter portion 76b has a first non-circular portion 76e on the tip thereof for allowing the operating part 77 to integrally pivot with the pivot shaft 76. The first non-circular portion 76e has a pair of linear portions 76g and a pair of connecting portions 76h. The linear portions 76g are disposed in parallel to each other. The connecting portions 76h couple the two ends of one linear portion 76g to those of the other linear portion 76g. The first small diameter portion 76b is a stepped shaft provided with large and small diameter steps. The first arm 82 is attached onto the small diameter step in a rotatable state. On the other hand, a torsion coil spring 80 is disposed onto the outer peripheral surface of the large diameter step of the first small diameter portion 76b. A first end of the torsion coil spring 80 is held by the restricting protrusion 76d, whereas a second end thereof is held by the first arm 82. The first small diameter portion 76b has a screw hole 76i formed on the end surface thereof. A screw member 86 is allowed to be screwed into the screw hole 76i for fixing the operating part 77 to the pivot shaft 76. The first non-circular portion 76e is disposed to protrude from the first lever seat surface 2i. A second non-circular portion 76f is disposed to protrude from the second lever seat surface 2j.

As illustrated in FIG. 3, the second small diameter portion 76c is the left-side small diameter portion of the pivot shaft 76 and is supported by the second support aperture 2g of the lid member 2b. The second small diameter portion 76c has the second non-circular portion 76f on the tip thereof. The second non-circular portion 76f has opposed parallel portions and allows the operating part 77 to integrally pivot with the pivot shaft 76. Similarly to the first non-circular portion 76e, the second non-circular portion 76f has a pair of linear portions 76g disposed in parallel to each other and a pair of connecting portions 76h coupling the two ends of one linear portion 76g to those of the other linear portion 76g.

### <Structure of Operating Part>

As illustrated in FIGS. 1, 3 and 4, the operation part 77 has a lever portion 77a, a first pivot shaft attached portion 77b and a second pivot shaft attached portion 77c. The lever portion 77a is disposed on the tip end (an example of a first end) of the operating part 77. The first and second pivot shaft attached portions 77b and 77c are disposed on the base end (an example of a second end) of the operating part 77. The lever portion 77a, the first pivot shaft attached portion 77b and the second pivot shaft attached portion 77c are integrally molded as a member made of metal such as zinc alloy.

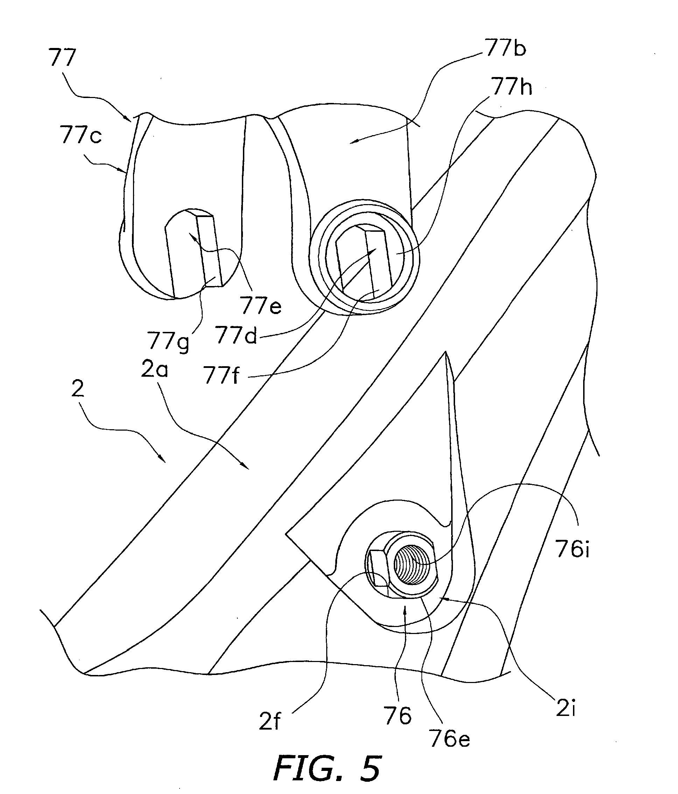

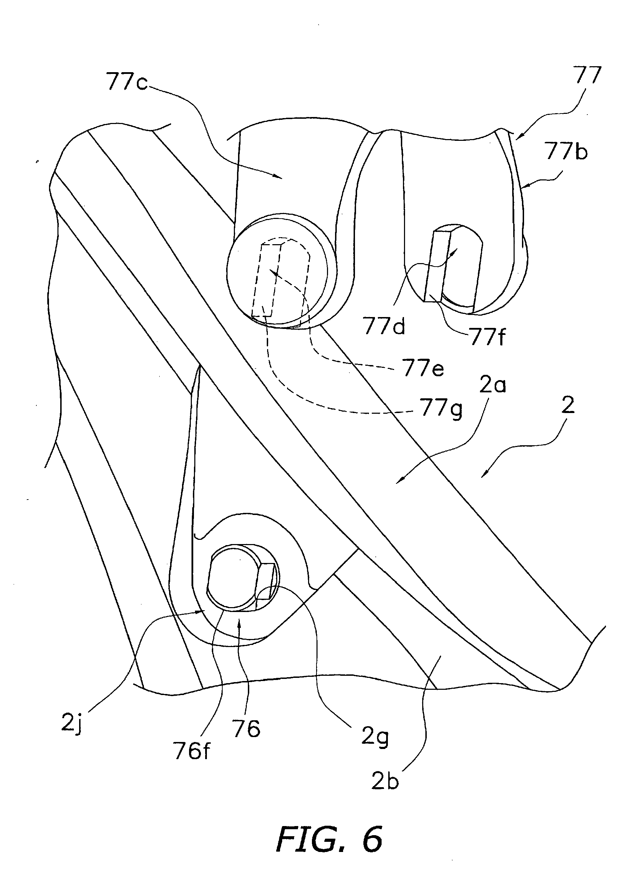

The lever portion 77a has a width that is narrower than that of the rear part of the reel unit 2 and the width slightly increases towards its tip. As illustrated in FIGS. 5 and 6, the lever portion 77a is branched into two portions, i.e., the first and second pivot shaft attached portions 77b and 77c extending towards the base end along the outer lateral surface of the reel unit 2. The first and second pivot shaft attached portions 77b and 77c are attached to the pivot shaft 76 while being integrally pivotable therewith. The first pivot shaft attached portion 77b has a first non-circular recess 77d. The first non-circular recess 77d can be engaged with the first non-circular portion 76e from a position located radially outward of the pivot shaft 76. The second pivot shaft attached portion 77c has a second non-circular recess 77e. The second non-circular recess 77e can be engaged with the second non-circular portion 76f from a position located radially outward of the pivot shaft 76. The first non-circular recess 77d has a first slit 77f, whereas the second non-circular recess 77e has a second slit 77g. The first and second slits 77f and 77g are engaged with the linear portions 76g, while respectively extending to the base ends of the first and second pivot shaft attached portions 77b and 77c. The first non-circular recess 77d penetrates through the first pivot shaft attached portion 77b and allows the screw hole 76i, which serves to receive the screw member 86 screwed therein, to be exposed to the outside. The first non-circular recess 77d has a seat surface 77h on the axially outer surface thereof, The seat surface 77h is dented for allowing the head portion of the screw member 86 to be disposed therein.

### <Structure of Switch Mechanism>

As illustrated in FIGS. 2 and 3, the switch mechanism 69 is configured to activate the front drag mechanism 8 when the drag switching lever 68 is disposed in the locked position, whereas it is configured to deactivate the front drag mechanism when the drag switching lever 68 is disposed in the unlocked position. Further, the switch mechanism 69 is configured to deactivate the rear drag mechanism 7e when the drag switching lever 68 is disposed in the locked position, whereas it is configured to activate the rear drag mechanism 7 when the drag switching lever 68 is disposed in the unlocked position. The switch mechanism 69 includes the tubular member 51, the rotation member 54, the lock member 72 configured to be moved up and down in conjunction with the drag switching lever 68, and a tension spring 81.

The rotation member 54 is a disc-shaped member. The rotation member 54 is attached onto the outer peripheral surface of the tubular member 51 while being integrally rotatable with the tubular member 51. Further, the rotation member 54 is integrally rotatable with the spool shaft 15, while being immovable back and forth with respect to the reel unit 2. The rotation member 54 is a member configured to lock/unlock the spool shaft 15, through the tubular member 51, so as to prevent/allow rotation of the spool shaft 15. The rotation member 54 has a plurality of interlock portions 54a. The interlock portions 54a are disposed to be circumferentially separated from each other at predetermined intervals. The interlock portions 54a are recessed on the outer peripheral part of the rotation member 54. Further, the rotation member 54 has an elongated hole 54b in the inner peripheral part thereof. The elongated hole 54b is fitted onto the chamfered portions 51e of the first support portion 51b of the tubular member 51 while being integrally rotatable therewith. The rotation member 54 is a member that the lock member 72 is interlocked with or separated from. Specifically, the rotation member 54 is locked, in a non-rotatable state, when the lock member 72 is interlocked therewith. Contrarily, the rotation member 54 is unlocked, in a rotatable state, when the lock member 72 is separated therefrom.

As illustrated in FIG. 3, the lock member 72 is configured to be moved up and down between the interlock position depicted with a solid line and the separate position depicted with a dashed two-dotted line. In the interlock position, the lock member 72 is interlocked with the rotation member 54 for preventing it from rotating. In the separate position, on the other hand, the lock member 72 releases interlocking with the rotation member 54 for allowing it to rotate. The lock member 72 is a roughly L-shaped plate member. The lock member 72 has a vertical side 72a and a horizontal side 72b. The lock member 72 is guided by the reel body 2a to be movable up and down. The horizontal side 72b of the lock member 72 has an upwardly protruded interlock protrusion 72c. The interlock protrusion 72c is interlocked with any one of the interlock portions 54a of the rotation member 54 in the interlock position.

A first end of the tension spring 81 is held by the reel body 2a. The tension spring 81 urges the lock member 72 towards the interlock position.

As illustrated in FIG. 3, when the drag switching lever 68 is moved to the unlocked position from the locked position, the lock member 72 is pressed by the second arm 78 and is accordingly moved downward. The interlock protrusion 72c is thus separated from the interlocked one of the interlock portions 54a while being at the separate position. The rotation member 54 thereby becomes rotatable and the spool shaft 15 becomes rotatable through the tubular member 51. Consequently, the front drag mechanism 8 is deactivated, whereas the rear drag mechanism 7 is activated.

When the drag switching lever 68 is moved to the locked position from the unlocked position, the lock member 72 is released from the pressure of the second arm 78 and is urged upward by the tension spring 81. Accordingly, the interlock protrusion 72c is interlocked with any one of the interlock portions 54a. The rotation member 54 thereby becomes non-rotatable and the spool shaft 15 becomes non-rotatable through the tubular member 51. Consequently, the front drag mechanism 8 is activated, whereas the rear drag mechanism 7 is deactivated.

As illustrated in FIG. 2, the first end of the toggle spring 73 is held by the spring holding arm 79 whereas a second end thereof is held by the reel body 2a. The toggle spring 73 selectively urges the drag switching lever 68 between the locked position and the unlocked position across the dead center, where the first end of the toggle spring 73 is passed through by an imaginary line connecting the first axis X1 and the second end of the toggle spring 73. The drag switching lever 68 is positioned between the locked position and the unlocked position by the reel unit 2.

### <Structure of Returning Mechanism >

The return mechanism 70 is a mechanism configured to return the drag switching lever 68 to the locked position from the unlocked position in conjunction with rotation of the handle 1 in the fishing-line winding direction. As illustrated in FIGS. 2, 3 and 4, the return mechanism 70 includes the first arm 82 attached to the drag switching lever 68, the aforementioned cam gear 20, the press member 83 attached to the cam gear 20, and a pressure spring 84 pressing the press member 83. For example, the pressure spring 84 is a coil spring disposed in a bent state.

As illustrated in FIGS. 2, 3 and 4, the first arm 82 is a plate-shaped arm member and is rotatably attached onto the first small diameter portion 76b of the pivot shaft 76 while radially extending from the pivot shaft 76. The first arm 82 is urged by the torsion coil spring 80 in the counter-clockwise direction in FIG. 2. The first arm 82 normally takes a restriction position while being urged by the torsion coil spring 80 and thereby makes contact with the restricting protrusion 76d. The torsion coil spring 80 is provided for keeping the first arm 82 at the restriction position when the drag switching lever 68 is moved to the locked position from the unlocked position and for pivoting the first arm 82 in conjunction with the drag switching lever 68. When the drag switching lever 68 pivots between the locked position and the unlocked position, the first arm 82 pivots between the locked position and the unlocked position in conjunction with the pivot shaft 76 by the action of the restricting protrusion 76d and the torsion coil spring 80. When the drag switching lever 68 is manually moved to the locked position from the unlocked position, even when the tip of the first arm 82 makes contact with the press member 83, to be described later, the first arm 82 is configured to be rotatable in a direction away from the restricting protrusion 76d so as to allow the drag switching lever 68 to be set in the locked position.

The cam gear 20 has the member attachment portion 20b on the second side thereof (i.e., the rear-side surface opposite to the front-side surface illustrated in FIG. 2). The press member 83 is attached to the member attachment portion 20b. Further, the cam gear 20 has a support hole 20c in the center thereof. The support hole 20c is supported by the gear shaft 2d.

The press member 83 is a plate-shaped member attached to the member attachment portion 20b while being rotatable within a predetermined angular range. The press member 83 has a plurality of (e.g., four) pressure protrusions 83a on the outer peripheral part thereof. The pressure protrusions 83a are circumferentially aligned at predetermined intervals. Each pressure protrusion 83a has a blade-like shape formed by a flat surface and a curved surface. The flat surface is disposed along the radial direction, whereas the curved surface extends from the distal end of the flat surface to the outer peripheral part of the press member 83 as it gradually gets away from the flat surface. The press member 83 is urged by the pressure spring 84 in the clockwise direction in FIG. 2 and is attached to the cam gear 20 while being rotatable in a predetermined rotary range.

### <Operation and Action of Reel>

Prior to casting, the switching lever 67 is operated to cause the anti-reverse mechanism 66 to prevent the rotor 3 from reversely rotating. Further, the bail arm 33 is inverted to the fishing-line releasing posture while being held by the hand of an angler. Yet further, the drag switching lever 68 is pivoted to the unlocked position (see the dashed two-dotted line in FIG. 2) from the locked position (see the solid line in FIG. 2).

When the drag switching lever 68 is pivoted to the unlocked position, the lock member 72 is pressed by the second arm 78 and is downwardly moved to the separate position. When the toggle spring 73 gets past the dead center, the drag switching lever 68 is urged towards the unlocked position and is finally held in the unlocked position. Further, the second arm 78, integrally formed with the drag switching lever 68, is held in the unlocked position and the lock member 72 is accordingly held in the separate position. Consequently, the rotation member 54 becomes rotatable, and the front drag mechanism 8 is deactivated while the rear drag mechanism 7 is activated. Small drag force is accordingly applied to the spool 4. In the return mechanism 70, on the other hand, the tip of the first arm 82 is located in the vicinity of one of the pressure protrusions 83a of the press member 83 in response to the pivot of the first arm 82.

While the drag switching lever 68 is pivoted to the locked position from the unlocked position, the tip of the first arm 82 may make contact with one of the pressure protrusions 83a depending on a position where the press member 83 is stopped. In this case, the face gear shaft 11a is prevented from rotating in the fishing-line releasing direction by the anti-reverse mechanism 66. The cam gear 20 is thereby prevented from rotating in the fishing-line releasing direction (i.e., the counter-clockwise direction in FIG. 2). The press member 83 is herein pressed by the pressure spring 84. However, the press member 83 is allowed to be rotated in the counter-clockwise direction when receiving a greater force than the pressure from the press spring 84. Therefore, the press member 83 is rotated in the counter-clockwise direction when being pressed by the first arm 82. When the drag switching lever 68 is backwardly moved to the unlocked position from the locked position, the drag switching lever 68 can be set to be in the unlocked position even when the first arm 82 is in contact with the press member 83.

Drag force of the rear drag mechanism 7 is regulated, for instance, depending on conditions in a fishing site (e.g., wind and water flow). For example, when the rear drag knob 50 is rotated in the clockwise direction, compression force of the coil spring 62 is increased and drag force is accordingly increased. In other words, when the rear drag knob 50 is rotated in the clockwise direction, the nut member 61 is moved to the left in FIG. 2 and compresses the coil spring 62. When the coil spring 62 is compressed, pressure is increased on the fourth drag washer 53a and the fifth drag washer 53b. Accordingly, the click gear 52, configured to be integrally rotated with the spool shaft 15, is braked with a larger force. Consequently, drag force is increased for braking the spool shaft 15 through the tubular member 51. Contrarily, drag force is reduced when the rear drag knob 50 is rotated in the counter-clockwise direction.

Casting will be performed after the aforementioned operation is completed. After casting, the bail arm 33 is returned to the fishing-line winding posture with the hand of the angler. Then the angler waits for fish to bite bait. When fish gets caught in the tackle, the spool 4 is reversely rotated. The drag switching lever 68 is herein set to be in the unlocked position. Therefore, in conjunction with the reverse rotation of the spool 4, the click gear 52 is rotated together with the spool shaft 15 and accordingly produces sound.

The handle 1 is to be rotated in the fishing-line winding direction when confirming whether or not a fish has been caught on the hook and/or for making the caught fish stay more firmly on the hook. Accordingly, the press member 83 of the return mechanism 70 presses the first arm 82, and the drag switching lever 68 is pressed towards the locked position from the unlocked position. When the toggle spring 73 gets past the dead center, the drag switching lever 68 is held in the locked position. When the drag switching lever 68 is held in the locked position, the lock member 72 is interlocked with the rotation member 54 and the spool shaft 15 is locked and prevented from rotating through the tubular member 51. Accordingly, the rear drag mechanism 7 is deactivated whereas the front drag mechanism 8 is activated. Consequently, large drag force acts on the spool 4.

### <Attachment Procedure of Drag Switch lever>

When attaching the operating part 77 of the drag switching lever 68 to the pivot shaft 76, the pivot shaft 76 is disposed in the locked position while the linear portions 76g of the first non-circular portion 76e are oriented in the vertical direction. Subsequently, the operating part 77 is attached to the pivot shaft 76 from an axially outward position, with respect to the pivot shaft 76. Here, the first slit 77f of the operating part 77 is engaged with the linear portions 76g of the first non-circular portion 76e, while the linear portions 76g of the second non-circular portion 76f are engaged with the second slit 77g. When the operating part 77 is attached onto the pivot shaft 76 under this condition, the operating part 77 is engaged with the pivot shaft 76 while being integrally rotatable therewith. Finally, the screw member 86 is screwed into the screw hole 76i, and thereby, the operating part 77 is fixed to the pivot shaft 76. The operating part 77 can be herein fixed to the pivot shaft 76 only by fitting the operating part 77 onto the pivot shaft 76 and then screwing the screw member 86 into the screw hole 76i. Therefore, the operating part 77 can be easily attached to the pivot shaft 76. Accordingly, the component cost and the assembling cost of the drag switching lever can be reduced.

### <Features>

The drag switching device 9 for a spinning reel is configured to switch the activation/deactivation state of the front drag mechanism 8 for braking the spool 4 attached to the reel unit 2 of the spinning reel that forwardly releases the fishing line. The drag switching device 9 includes the drag switching lever 68 and the switch mechanism 69. The drag switching lever 68 includes the pivot shaft 76 and the operating part 77 and pivots between the locked position and the unlocked position, which is a position shifted away from the locked position at a predetermined pivot angle. The pivot shaft 76 is disposed along the transverse (right-and-left) direction of the reel unit 2 while being rotatably supported by the reel unit 2. The operating part 77 has the lever portion 77a, the first pivot shaft attached portion 77b and the second pivot shaft attached portion 77c. The lever portion 77a is disposed on the tip end of the operating part 77, while the first and second pivot shaft attached portions 77b and 77c are disposed on the base end of the operating part 77. The first and second pivot shaft attached portions 77b and 77c are integrally formed with the lever portion 77a. The first and second pivot shaft attached portions 77b and 77c are two portions that branch from the lever portion 77a while extending towards the base end arranged opposite to the tip end along the outer lateral surface of the reel unit 2. Further, the first and second pivot shaft attached portions 77b and 77c are attached to the pivot shaft 76 while being integrally pivotable therewith. The switch mechanism 69 is configured to activate the front drag mechanism 8 when the drag switching lever 68 is disposed in the locked position, and deactivate the front drag mechanism 8 when the drag switching lever 68 is disposed in the unlocked position. The pivot shaft 76 has the first non-circular portion 76e disposed on one end thereof and the second non-circular portion 76f disposed on the other end thereof. The first pivot shaft attached portion 77b has the first non-circular recess 77d arranged to engage with the first non-circular portion 76e from a position located radially outwards of the pivot shaft 76. The second pivot shaft attached portion 77c has the second non-circular recess 77e arranged to engage with the second non-circular portion 76f from a position located radially outwards of the pivot shaft 76.

In the drag switching device 9 for a spinning reel, the front drag mechanism 8 is configured to be activated when the drag switching lever 68 is disposed in the locked position, and deactivated when the drag switching lever 68 is pivoted to the unlocked position. The operating part 77 of the drag switching lever 68 has the lever portion 77a and the first and second pivot shaft attached portions 77b and 77c integrally formed with the lever portion 77a. Therefore, the operating part 77 is constituted of a single member, and thereby, the number of components of the operating part 77 can be reduced.

Further, when attaching the operating part 77 to the pivot shaft 76, it is only required to engage the first non-circular recess 77d formed on the first pivot shaft attached portion 77b of the operating part 77 with the first non-circular portion 76e formed on one end of the pivot shaft 76, and to engage the second pivot shaft attached portion 77c of the operating part 77 with the second non-circular portion 76f formed on the other end of the pivot shaft 76. Therefore, the operating part 77 can be easily attached to the pivot shaft 76.

The operating part 77 can be herein formed by a single member, and therefore, the number of components of the operating part 77 can be reduced. Further, the operating part 77 can be attached to the pivot shaft 76 only by engaging the first non-circular recess 77d and the second non-circular recess 77e of the operating part 77 with, respectively, the first non-circular portion 76e and the second non-circular portion 76f of the pivot shaft 76. Therefore, the operating part 77 can be easily attached to the pivot shaft 76. Accordingly, the component cost and the assembling cost of the drag switching lever can be reduced.

(B) In the drag switching device 9, each of the first and second non-circular portions 76e and 76f has a pair of the linear portions 76g disposed in parallel to each other and a pair of the connecting portions 76h coupling the ends of one linear portion 76g to those of the other linear portion 76g. The first non-circular recess 77d has the first slit 77f extending to the edge of the second end thereof to be engaged with the corresponding linear portions 76g. Likewise, the second non-circular recess 77e has the second slit 77g extending to the edge of the second end thereof to be engaged with the corresponding linear portions 76g.

In this case, the first pivot shaft attached portion 77b has the first slit 77f extending in the second end, while the second pivot shaft attached portion 77c has the second slit 77g extending in the second end. Accordingly, the first pivot shaft attached portion 77b and the second pivot shaft attached portion 77c can be respectively engaged with the first non-circular portion 76e and the second non-circular portion 76f by sliding the first and second pivot shaft attached portions 77b and 77c towards the pivot shaft 76 from an axially outward position. Therefore, the operating part 77 can be further easily attached to the pivot shaft 76.

(C) In the drag switching device 9, the pivot shaft 76 has the screw hole 76i formed on the end surface of one end thereof for allowing the screw member 86 to be screwed therein. The first non-circular recess 77d penetrates through the first pivot shaft attached portion 77b, and thereby, allows the screw hole 76i to be exposed to the outside. In this case, the operating part 77 can be easily fixed to the pivot shaft 76 by means of the screw member 86.

In the drag switching device 9, the seat surface 77h is formed on the axially outer surface of the first non-circular recess 77d while being dented for allowing the head portion of the screw member 86 to be disposed therein. In this case, the head portion of the screw member 86 is accommodated in the seat surface 77h, and is thereby prevented from protruding axially outwards. Accordingly, the fishing line is prevented from getting stuck with the head portion of the screw member 86.

### <Other Exemplary Embodiments>

An exemplary embodiment of the present invention has been described above. However, the present invention is not limited to the aforementioned exemplary embodiment, and a variety of changes can be herein made without departing from the scope of the present invention.

In the aforementioned exemplary embodiment, the activation (or deactivation) state of the front drag mechanism 8 and the deactivation (or activation) state of the rear drag mechanism 7 are switched by the drag switching device 9. However, the present invention is not limited to the configuration. For example, the activation/deactivation state of at least either of the front drag mechanism and the rear drag mechanism may be switched by the drag switch mechanism.

In the aforementioned exemplary embodiment, the first pivot shaft attached portion 77b has the first slit 77f, while the second pivot shaft attached portion 77c has the second slit 77g. However, the first slit 77f and the second slit 77g do not have to be formed. Alternatively, a slit may be formed in either one of the first and second pivot shaft attached portions. In this case, the first and second pivot shaft attached portions may be attached to the pivot shaft based on their elasticity.

In the aforementioned exemplary embodiment, the operating part 77 is made of metal, but alternatively, may be made of synthetic resin.

In the aforementioned exemplary embodiment, the lever portion 77a, the first pivot shaft attached portion 77b and the second pivot shaft attached portion 77c of the operating part 77 are integrally formed as a member made of the same material. However, the present invention is not limited to this structure. For example, the lever portion may be made of synthetic resin (or metal) whereas the first and second pivot shaft attached portions may be made of metal (or synthetic resin). Alternatively, the lever portion may be made of metal (or synthetic resin), whereas the first and second pivot shaft attached portions may be made of metal (or synthetic resin) different from that of the lever portion.

## Claims

1. A spinning reel drag switching device configured to switch an activation state of a first drag mechanism for braking a spool attached to a reel unit of a spinning reel that forwardly releases a fishing line, the spinning reel drag switching device comprising:
a drag switching lever (68) configured to pivot between a first position and a second position shifted away from the first position at a predetermined pivot angle, the drag switching lever including: a pivot shaft (76) disposed along a transverse direction of the reel unit (2), the pivot shaft rotatably supported by the reel unit; and an operating part having a lever portion disposed on a first end thereof and a pair of first and second pivot shaft attached portions (77b) (77c) disposed on a second end thereof arranged opposite to the first end, the first and second pivot shaft attached portions integrally formed with the lever portion, the first and second pivot shaft attached portions branching from the lever portion and extending towards the second end along an outer lateral surface of the reel unit, the first and second pivot shaft attached portions attached to the pivot shaft in an integrally rotatable state; and
a switch mechanism configured to: activate the first drag mechanism when the drag switching lever is disposed in the first position; and deactivate the first drag mechanism when the drag switching lever is disposed in the second position,
wherein the pivot shaft has a first non-circular portion on one end thereof and a second non-circular portion on the other end thereof, and
the first pivot shaft attached portion has a first non-circular recess (77d) arranged to engage with the first non-circular portion from a position located radially outwards of the pivot shaft and the second pivot shaft attached portion has a second non-circular recess (77e) arranged to engage with the second non-circular portion from a position located radially outwards of the pivot shaft.

2. The spinning reel drag switching device according to claim 1,
wherein each of the first and second non-circular portions has a pair of parallel linear portions and a pair of connecting portions, the connecting portions connecting ends of one of the linear portions to ends of the other of the linear portions, and
each of the first and second non-circular recesses has a slit to be engaged with the linear portions of a corresponding one of the first and second non-circular portions, the slit extending to an edge of the second end of a corresponding one of the first and second pivot shaft attached portions.

3. The spinning reel drag switching device according to one of claims 1 and 2,
wherein the pivot shaft has a screw hole on an end surface of said one end for allowing a screw member to be screwed therein, and
the first non-circular recess penetrates through the first pivot shaft attached portion for allowing the screw hole to be exposed to the outside therefrom.

4. The spinning reel drag switching device according to claim 3,
wherein the first non-circular recess has a seat surface on an axially outer surface thereof, the seat surface being dented for allowing a head portion of the screw member to be disposed thereon.

5. A spinning reel, comprising the spinning reel drag switching device according to one of claims 1 to 4.

## Patentansprüche

1. Spinnrollenverzögerungsschaltvorrichtung konfiguriert zum Schalten eines Aktivierungszustandes eines ersten Verzögerungsmechanismus zum Bremsen einer an einer Rolleneinheit einer eine Angelschnur nach vorne ausgebenden Spinnrolle befestigten Spule, wobei die Spinnrollenverzögerungsschaltvorrichtung umfasst:
einen Verzögerungsschalthebel (68), konfiguriert zum Schwenken zwischen einer ersten Position und einer, bezüglich der ersten Position um einem vorbestimmten Schwenkwinkel verschoben zweiten Position, wobei der Verzögerungsschalthebel enthält: eine Schwenkwelle (76), angeordnet entlang einer Querrichtung der Rolleneinheit (2), wobei die Schwenkwelle drehbar von der Rolleneinheit gestützt ist; und ein Bedienpart, mit einem Hebelabschnitt an einem ersten Ende davon, und mit einem Paar von ersten und zweiten Schwenkwellen-befestigten-Abschnitte (77b, 77c), an einem zweiten Ende davon, gegenüberliegend dem ersten Ende, wobei die erste und die zweite Schwenkwellen-befestigten-Abschnitte einstückig mit dem Hebelabschnitt ausgebildet sind, wobei die ersten und zweiten Schwenkwellen-befestigten-Abschnitte bezüglich des Hebelabschnittes abzweigen und sich zu dem zweiten Ende hin entlang einer äußeren Seitenfläche der Rolleneinheit erstrecken, wobei die ersten und zweiten Schwenkwellen-befestigten-Abschnitte in einem integral drehbaren Zustand bezüglich der Schwenkwelle befestigt sind; und
einen Schaltmechanismus konfiguriert zum: Aktivieren des ersten Verzögerungsmechanismus, wenn der Verzögerungsschalthebel in der ersten Position angeordnet ist, und zum Deaktivieren des ersten Verzögerungsmechanismus, wenn der Verzögerungsschalthebel in der zweiten Position angeordnet ist,
wobei die Schwenkwelle einen ersten nicht-kreisförmigen Abschnitt an einem Ende davon und einen zweite nicht-kreisförmigen Abschnitt an dem anderen Ende davon aufweist, und
der erste Schwenkwellen-befestigte-Abschnitt eine erste nicht-kreisförmige Ausnehmung (77d) aufweist, angeordnet um mit dem nicht-kreisförmigen Abschnitt von einer Position radial außerhalb der Schwenkwelle in Eingriff zu gelangen und der zweiten Schwenkwellen-befestigte-Abschnitt eine zweite nicht kreisförmige Ausnehmung (77e) aufweist, angeordnet um mit dem zweiten nicht-kreisförmigen Abschnitt von einer Position radial außerhalb der Schwenkachse in Eingriff zu gelangen.

2. Spinnrollenverzögerungsschaltvorrichtung nach Anspruch 1,
bei welcher jeder der ersten und zweiten nicht-kreisförmigen Abschnitte ein Paar von parallelen linearen Abschnitten und ein Paar von Verbindungsabschnitten aufweist, wobei die Verbindungsabschnitte Enden von einem der linearen Abschnitte mit Enden des anderen der linearen Abschnitte verbinden, und
jede der ersten und zweiten nicht-kreisförmigen Ausnehmungen einen Schlitz hat, zum Eingriff mit den linearen Abschnitten eines entsprechenden der ersten und zweiten nicht-kreisförmigen Abschnitte, wobei sich der Schlitz zu einer Kante des zweiten Endes einer entsprechenden der erste und zweite Schwenkwellen-befestigten-Abschnitte erstreckt.

3. Spinnrollenverzögerungsschaltvorrichtung nach einem der Ansprüche 1 und 2,
bei welcher die Schwenkwelle eine Gewindebohrung an einer Stirnfläche des einen Endes aufweist, um es einem Schraubenelement zu ermöglichen eingeschraubt zu werden, und
die erste nicht-kreisförmige Aussparung den ersten Schwenkwellen-befestigten-Abschnitt durchdringt, um es der Gewindebohrung zu ermöglichen zu der Außenseite davon freiliegend zu sein.

4. Spinnrollenverzögerungsschaltvorrichtung nach Anspruch 3,
bei welcher die erste nicht-kreisförmige Aussparung eine Sitzfläche an einer axial äußeren Fläche davon aufweist, wobei die Sitzfläche gezahnt ist, um es einem Kopfabschnitt der Schraubenelementes zu erlauben dort angeordnet zu werden.

5. Spinnrolle, umfassend die Spinnrollenverzögerungsschaltvorrichtung nach einem der Ansprüche 1 bis 4.

## Revendications

1. Dispositif de commutation de frein pour moulinet à lancer, configuré pour commuter un état d'activation d'un premier mécanisme de frein, pour freiner un tambour attaché à une unité de moulinet d'un moulinet à lancer qui libère vers l'avant une ligne de pêche, le dispositif de commutation de frein pour moulinet à lancer comprenant :
un levier de commutation de frein (68) configuré pour pivoter entre une première position et une deuxième position décalée de la première position à un angle pivot prédéterminé, le levier de commutation de frein comprenant : un arbre pivot (76) disposé le long d'une direction transversale de l'unité de moulinet (2), l'arbre pivot étant supporté rotatif par l'unité de moulinet ; et une partie d'actionnement, ayant une partie de levier disposée sur une première extrémité de celle-ci et une paire de première et deuxième parties attachées à l'arbre pivot (77b, 77c), disposées sur une deuxième extrémité de celle-ci, agencée opposée à la première extrémité, les première et deuxième parties attachées à l'arbre pivot étant formées intégralement avec la partie de levier, les première et deuxième parties attachées à l'arbre pivot se ramifiant depuis la partie de levier et s'étendant vers la deuxième extrémité le long d'une surface latérale externe de l'unité de moulinet, les première et deuxième parties attachées à l'arbre pivot étant attachées à l'arbre pivot dans un état de rotation intégrale, et
un mécanisme de commutation configuré pour : activer le premier mécanisme de frein lorsque le levier de commutation de frein est disposé dans la première position, et désactiver le premier mécanisme de frein lorsque le levier de commutation de frein est disposé dans la deuxième position,
dans lequel l'arbre pivot a une première partie non circulaire à une extrémité de celui-ci et une deuxième partie non circulaire à l'autre extrémité de celui-ci, et
la première partie attachée à l'arbre pivot a un premier évidement non circulaire (77d) agencé pour un engagement avec la première partie non circulaire, depuis une position située radialement vers l'extérieur de l'arbre pivot, et la deuxième partie attachée à l'arbre pivot a un deuxième évidement non circulaire (77e) agencé pour un engagement avec la deuxième partie non circulaire, depuis une position située radialement vers l'extérieur de l'arbre pivot.

2. Dispositif de commutation de frein pour moulinet à lancer, selon la revendication 1, dans lequel chacune des première et deuxième parties non circulaires a une paire de parties linéaires parallèles et une paire de parties de connexion, les parties de connexion connectant des extrémités de l'une des parties linéaires à des extrémités de l'autre des parties linéaires, et
chacun des premier et deuxième évidements non circulaires a une fente pour être engagée avec les parties linéaires d'une partie correspondante des première et deuxième parties non circulaires, la fente s'étendant depuis un bord de la deuxième extrémité d'une partie correspondante des première et deuxième parties attachées à l'arbre pivot.

3. Dispositif de commutation de frein pour moulinet à lancer selon la revendication 1 ou 2,
dans lequel l'arbre pivot a un trou de vis sur une surface d'extrémité de ladite une extrémité, pour permettre le vissage dans celui-ci d'un élément de vis, et
le premier évidement non circulaire pénètre à travers la première partie attachée à l'arbre pivot, pour permettre au trou de vis d'être exposé vers l'extérieur, à partir de celui-ci.

4. Dispositif de commutation de frein pour moulinet à lancer selon la revendication 3, dans lequel le premier évidement non circulaire a une surface de siège sur une surface axialement externe de celui-ci, la surface de siège étant dentée pour permettre à une partie de tête de l'élément de vis d'être disposée sur celle-ci.

5. Moulinet à lancer comprenant le dispositif de commutation de frein pour moulinet à lancer selon l'une quelconque des revendications 1 à 4.
